(19) Europäisches Patentamt / European Patent Office / Office européen des brevets

(11) **EP 3 684 959 B1**

(12) **EUROPÄISCHE PATENTSCHRIFT**

(45) Veröffentlichungstag und Bekanntmachung des Hinweises auf die Patenterteilung:
**23.08.2023 Patentblatt 2023/34**

(21) Anmeldenummer: **18780031.3**

(22) Anmeldetag: **14.09.2018**

(51) Internationale Patentklassifikation (IPC):
**C23C 2/20** *(2006.01)* **C23C 2/06** *(2006.01)*

(52) Gemeinsame Patentklassifikation (CPC):
**C23C 2/20; C23C 2/06**

(86) Internationale Anmeldenummer:
**PCT/EP2018/074928**

(87) Internationale Veröffentlichungsnummer:
**WO 2019/057635 (28.03.2019 Gazette 2019/13)**

(54) **SCHMELZTAUCHBESCHICHTETES STAHLBAND MIT VERBESSERTEM OBERFLÄCHENERSCHEINUNGSBILD UND VERFAHREN ZU SEINER HERSTELLUNG**

HOT DIP COATED STEEL STRIP HAVING AN IMPROVED SURFACE APPEARANCE AND METHOD FOR PRODUCTION THEREOF

BANDE D'ACIER REVÊTUE PAR IMMERSION DANS UNE MASSE FONDUE, PRÉSENTANT UN ASPECT DE SURFACE AMÉLIORÉ ET PROCÉDÉ POUR SA FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2017 DE 102017216572**

(43) Veröffentlichungstag der Anmeldung:
**29.07.2020 Patentblatt 2020/31**

(73) Patentinhaber:
• **ThyssenKrupp Steel Europe AG**
  **47166 Duisburg (DE)**
• **thyssenkrupp AG**
  **45143 Essen (DE)**

(72) Erfinder:
• **YANIK,Robert**
  **47506 Neukirchen-Vluyn (DE)**

• **MACHEREY, Friedhelm**
  **46519 Alpen (DE)**
• **SCHÖNTAUBE, Bastian**
  **47877 Willich (DE)**
• **VENNEMANN, Frank**
  **46535 Dinslaken (DE)**
• **SCHULZ, Jennifer**
  **59427 Unna (DE)**
• **SCHULZE-KRAASCH, Folkert**
  **47179 Duisburg (DE)**

(74) Vertreter: **ThyssenKrupp Steel Europe AG Patente/Patent Department Kaiser-Wilhelm-Straße 100 47166 Duisburg (DE)**

(56) Entgegenhaltungen:
**EP-A1- 3 205 741     WO-A1-2006/002843**
**US-A- 3 619 247     US-A- 3 681 118**

EP 3 684 959 B1

**Beschreibung**

**Technisches Gebiet**

Die vorliegende Erfindung betrifft ein Verfahren zur Schmelztauchbeschichtung von Stahlflachprodukten, sowie ein entsprechend hergestelltes schmelztauchbeschichtetes Stahlflachprodukt.

**Technischer Hintergrund**

Verfahren zur Beschichtung von Stahlflachprodukten mit einer vor Korrosion schützenden Beschichtung auf Basis von Zn oder von Zn und Magnesium sind dem Fachmann an sich bekannt.

DE 20 2014 010 854 U1 und DE 20 2014 008 863 U1 offenbaren jeweils Stahlbleche, welche eine Beschichtung enthaltend Zn und Aluminium aufweisen. Diese Bleche weisen einen $Wa_{0,8}$-Wert, welcher ein Maß für die Langwelligkeit der Oberfläche der Beschichtung ist, von kleiner oder gleich 0,43 $\mu$m auf. Das Herstellverfahren, welches in dieser Schrift offenbart wird, umfasst das Beschichten eines Kaltbands durch Feuerverzinken, d.h. das unbeschichtete Band wird durch ein Schmelzenbad, welches die Beschichtungskomponenten enthält, geleitet. Überschüssiges Beschichtungsmaterial wird im flüssigen Zustand mit Stickstoff abgestreift, um eine dünne Beschichtung zu erhalten.

DE 11 2014 000 102 T5 offenbart ein Verfahren zur Herstellung eines Zn-Al-beschichteten Blechs mit optimiertem Abstreifen. Um eine Oberfläche zu erhalten, die sich durch einen niedrigen $Wa_{0,8}$-Wert von kleiner oder gleich 0,55 $\mu$m auszeichnet, ist es gemäß dieser Veröffentlichung notwendig, eine sehr genau definierte Relation von Abstand zwischen Düse und Blech, mittlerer Düsenhöhe, Druck des Abstreifgases, Laufgeschwindigkeit des zu beschichtenden Bandes und Volumenanteil Sauerstoff im Abstreifgas einzuhalten.

US 2012/0107636 A1 offenbart ein Verfahren zur Beschichtung von Stahlbändern mit einer vor Korrosion schützenden Beschichtung, in dem nach dem Eintauchen in ein Schmelzenbad enthaltend die Beschichtungskomponenten in geschmolzener Form überschüssiges Beschichtungsmaterial mittels Düsen abgestreift wird. Dabei wird ein Abstreifgas eingesetzt, welches ein niedriges Oxidationsvermögen aufweist. Des Weiteren wird das beschichtete Stahlband bei der Behandlung mit dem Abstreifgas durch eine Box geführt.

Weitere Beschichtungsverfahren für Stahlbänder werden in der US 3,619,247, US 3,681,118, WO 2006/002843 A1 sowie in der EP 3 205 741 A1 beschrieben. Die im Stand der Technik offenbarten Verfahren zur Beschichtung von Stahlflachprodukten mit korrosionsschützenden Beschichtungen und die erzeugten Produkte sind bezüglich ihrer Oberflächenbeschaffenheit noch zu verbessern. Insbesondere ist es gewünscht, dass die Oberfläche der vor Korrosion schützenden Beschichtung so gestaltet ist, dass eine aufgebrachte Lackierung hohen Qualitätsansprüchen genügt, so dass das Auftragen eines Primers bzw. einer Grundierung entfallen kann.

Aufgabe der vorliegenden Erfindung ist es daher, ein Verfahren zur Herstellung eines mit einer vor Korrosion schützenden Beschichtung versehenen Stahlflachprodukts bereit zu stellen, welches eine optisch ansprechende Oberfläche aufweist, die ohne Verwendung eines Primers bzw. einer Grundierung lackiert werden kann und hohen Qualitätsansprüchen genügt.

Diese Aufgaben werden gelöst durch das erfindungsgemäße Verfahren zur Herstellung eines Stahlbandes mit einer vor Korrosion schützenden Beschichtung, mindestens umfassend die folgenden Schritte:

(A) Durchführen des Stahlbandes mit einer Temperatur $T_1$ durch ein Schmelzenbad mit einer Temperatur $T_2$, enthaltend die Elemente der vor Korrosion schützenden Beschichtung in geschmolzener Form, um ein beschichtetes Stahlband zu erhalten, wobei das Schmelzenbad neben Zn und unvermeidbaren Verunreinigungen 0,1 bis 2,0 Gew.-% Al und optional 0,1 bis 3 Gew.-% Mg enthält,

(B) Abstreifen des beschichteten Stahlbandes mittels wenigstens einer Düse, die ein Abstreifgas mit einer Temperatur $T_3$ unter einem Winkel $\alpha$ in Richtung des beschichteten Stahlbandes ausstößt,

wobei der Wert $Q \leq 6{,}956$ ist mit

$$Q = \frac{3{,}76 + (\alpha * (10 + 6{,}3 * h)}{10 - 0{,}86 * T_3{}^2 + 4{,}82 * \Delta T} \qquad \text{(I)},$$

worin

$\alpha$     Winkel zwischen einer fiktiven Geraden, die senkrecht auf dem beschichteten Stahlband steht und durch die Mitte der wenigstens einen Düse zeigt, und der eingestellten Düsenrichtung, in °,

h      Abstand zwischen der Oberfläche des Schmelzenbades und dem unteren Rand der Düse in mm,

$T_3$     Temperatur des Abstreifgases in °C,

$\Delta T$    Differenz zwischen der Temperatur $T_2$ des Schmelzenbades und der Temperatur $T_1$ des Stahlbandes in °C,

und

bedeuten, wobei $\Delta T$ -60 Bis +120 °C beträgt, wobei $T_3$ 15 bis 50 °C beträgt, wobei der Winkel $\alpha$ -5,0° bis +5,0° beträgt, wobei h zwischen 50 bis 800 mm beträgt.

Die einzelnen Schritte des erfindungsgemäßen Verfahrens werden im Folgenden detailliert beschrieben.

Das erfindungsgemäße Verfahren kann diskontinuierlich oder kontinuierlich durchgeführt werden. In einer bevorzugten Ausführungsform wird es kontinuierlich durchgeführt.

Schritt (A) des erfindungsgemäßen Verfahrens umfasst das Durchführen des Stahlbandes mit einer Temperatur $T_1$ durch ein Schmelzenbad mit einer Temperatur $T_2$, enthaltend die Elemente der vor Korrosion schützenden Beschichtung in geschmolzener Form, um ein beschichtetes Stahlband zu erhalten.

In dem erfindungsgemäßen Verfahren können im Allgemeinen alle dem Fachmann bekannten Stahlbänder eingesetzt werden. In einer bevorzugten Ausführungsform enthält das in dem erfindungsgemäßen Verfahren eingesetzte Stahlband neben Fe und unvermeidbaren Verunreinigungen (alle Angaben in Gew.-%):

0,00 bis 0,3, besonders bevorzugt 0,0001 bis 0,3, ganz besonders bevorzugt 0,0001 bis 0,2, C,
0,00 bis 1,50, besonders bevorzugt 0,0005 bis 0,50, ganz besonders bevorzugt 0,0005 bis 0,45, Si,
0,01 bis 4,00, besonders bevorzugt 0,05 bis 2,50, ganz besonders bevorzugt 0,05 bis 2,0, Mn,
0,00 bis 0,10, besonders bevorzugt 0,001 bis 0,07, ganz besonders bevorzugt 0,001 bis 0,06, P,
0,00 bis 0,02, besonders bevorzugt 0,00 bis 0,012, S,
0,001 bis 2,20, besonders bevorzugt 0,01 bis 1,5, ganz besonders bevorzugt 0,01 bis 1,3, Al,
bis zu 0,2, besonders bevorzugt bis zu 0,15, Ti+Nb,
bis 1,50, besonders bevorzugt 0,001 bis 0,9, Cr+Mo,
bis zu 0,25, besonders bevorzugt bis zu 0,02, V,
bis zu 0,01, besonders bevorzugt bis zu 0,009 N,
0,00 bis 0,20, besonders bevorzugt 0,001 bis 0,15, Ni,
bis zu 0,01, besonders bevorzugt bis zu 0,005, B und
bis zu 0,01 Ca.

Die in dem erfindungsgemäßen Verfahren eingesetzten Stahlbänder können beispielsweise dadurch erhalten werden, dass aus einer entsprechenden Schmelze erhaltene Brammen warmgewalzt werden. Dieses dem Fachmann bekannte Warmband kann erfindungsgemäß in einer üblichen Dicke und Breite vorliegen.

In einer weiteren möglichen Ausführungsform wird das genannte Warmband kaltgewalzt, um ein so genanntes Kaltband zu erhalten. Dieses dem Fachmann bekannte Kaltband kann erfindungsgemäß in einer üblichen Dicke und Breite vorliegen.

Im Allgemeinen kann das in Schritt (A) des erfindungsgemäßen Verfahrens eingesetzte Stahlband jedes dem Fachmann als geeignet bekannte Gefüge aufweisen. In einer bevorzugten Ausführungsform besteht das eingesetzte Stahlband aus einem Dualphasenstahl, einem Bake-Hardening-Stahl oder einem IF-Stahl.

Vor Schritt (A) des erfindungsgemäßen Verfahrens kann das Stahlband mit dem Fachmann bekannten Methoden vorbehandelt werden, beispielsweise einer Reinigung, Entfettung, Beizung, rekristallisierende Glühung, Entkohlung unterzogen werden. Entsprechende Verfahren sind dem Fachmann an sich bekannt und beispielsweise in A.R. Marder, The metallurgy of zinc-coated steel sheet, Progress in Materials Science 45 (2000), Seiten 191 bis 271, beschrieben.

In Schritt (A) des erfindungsgemäßen Verfahrens wird das Stahlband, welches eine Temperatur $T_1$ aufweist, durch ein Schmelzenbad, welches eine Temperatur $T_2$ aufweist, geführt.

Beispielsweise beträgt die Temperatur des Stahlbands $T_1$ in dem erfindungsgemäßen Verfahren 400 bis 550 °C, bevorzugt 400 bis 500 °C. Erfindungsgemäß wird das Stahlband gemäß der vorliegenden Erfindung vor Schritt (A) durch Erwärmen auf die genannte Temperatur $T_1$ gebracht. Die Temperatur $T_2$ des in Schritt (A) eingesetzten Schmelzenbads beträgt in dem erfindungsgemäßen Verfahren beispielsweise 400 bis 650 °C, bevorzugt 440 bis 600 °C.

Die Erfinder der vorliegenden Erfindung haben herausgefunden, dass in Verbindung mit weiteren Parametern die Differenz zwischen der Temperatur $T_2$ des Schmelzenbads und der Temperatur $T_1$ des Stahlbands $\Delta T$ einen deutlichen Einfluss auf die Oberfläche der einen vor Korrosion schützenden Beschichtung tragenden Stahlbands hat. Erfindungsgemäß beträgt $\Delta T$ -60 bis +120 °C, bevorzugt -55 bis +115 °C.

Das erfindungsgemäß eingesetzte Schmelzenbad enthält die in der vor Korrosion schützenden Beschichtung vorliegenden Elemente. Das erfindungsgemäß eingesetzte Schmelzenbad enthält neben Zn und unvermeidbaren Verunreinigungen 0,1 bis 2,0 Gew.-% Al und optional 0,1 bis 3,0 Gew.-% Mg.

Das erfindungsgemäß eingesetzte Schmelzenbad enthält daher in einer ersten bevorzugten Ausführungsform neben Zn und unvermeidbaren Verunreinigungen 0,1 bis 0,4 Gew.-% Al.

In einer zweiten Ausführungsform enthält das erfindungsgemäß eingesetzte Schmelzenbad neben Zn und unvermeidbaren Verunreinigungen 0,1 bis 2,0 Gew.-% Al, bevorzugt 1,0 bis 2,0 Gew.-%, Al, und 0,1 bis 3,0 Gew.-% Mg, bevorzugt 1,0 bis 2,0 Gew.-%, Mg.

Das Bereitstellen eines solchen Schmelzenbads bei einer entsprechenden Temperatur $T_2$ ist dem Fachmann an sich bekannt und beispielsweise beschrieben in A.R. Marder, The metallurgy of zinc-coated steel sheet, Progress in Materials Science 45 (2000), Seiten 191 bis 271, beschrieben.

In einer bevorzugten Ausführungsform wird das Stahlband in Schritt (A) des erfindungsgemäßen Verfahrens so durch das Schmelzenbad geführt, dass es senkrecht bzw. nahezu senkrecht aus diesem wieder austritt. Während des Durchführens des Stahlbands durch das Schmelzenbad haftet die entsprechende Schmelze an der Oberfläche des Stahlbands an.

Bevorzugt wird das nach Schritt (A) des erfindungsgemäßen Verfahrens erhaltene beschichtete Stahlband direkt in Schritt (B) des erfindungsgemäßen Verfahrens überführt.

Schritt (B) des erfindungsgemäßen Verfahrens umfasst das Abstreifen des beschichteten Stahlbandes mittels wenigstens einer Düse, die ein Abstreifgas mit einer Temperatur $T_3$ unter einem Winkel $\alpha$ in Richtung des beschichteten Stahlbandes ausstößt.

Erfindungsgemäß wird mit $\alpha$ der Winkel zwischen einer fiktiven Geraden, die senkrecht auf dem beschichteten Stahlband steht und durch die Mitte der wenigstens einen Düse zeigt, und der eingestellten Düsenrichtung verstanden. Der Winkel $\alpha$ wird in ° angegeben.

Erfindungsgemäß bedeutet ein positiver Wert für $\alpha$, dass die eingestellte Düsenrichtung relativ zu der fiktiven Geraden, die senkrecht auf dem beschichteten Stahlband steht und durch die Mitte der wenigstens einen Düse zeigt, in die Richtung, in die sich das Band bewegt, gedreht ist. In der bevorzugten Ausführungsform, dass das beschichtete Stahlband das Schmelzenbad senkrecht nach oben verlässt, bedeutet somit ein positiver Wert für $\alpha$, dass die Düse nach oben gedreht ist.

Erfindungsgemäß bedeutet ein negativer Wert für $\alpha$, dass die eingestellte Düsenrichtung relativ zu der fiktiven Geraden, die senkrecht auf dem beschichteten Stahlband steht und durch die Mitte der wenigstens einen Düse zeigt, entgegen der Richtung, in die sich das Band bewegt, gedreht ist. In der bevorzugten Ausführungsform, dass das beschichtete Stahlband das Schmelzenbad senkrecht nach oben verlässt, bedeutet somit ein negativer Wert für $\alpha$, dass die Düse nach unten gedreht ist.

Erfindungsgemäß beträgt $\alpha$ -5,0° bis +5,0°, bevorzugt -4,0° bis +4,0°,

Erfindungsgemäß beschreibt h den Abstand zwischen der Oberfläche des Schmelzenbades und dem unteren Rand der Düse in mm. Bei Durchführung des erfindungsgemäßen Verfahrens ist die Oberfläche des Schmelzenbades im Allgemeinen nicht in Ruhe, sondern bewegt sich wellenförmig. In diesem Fall wird erfindungsgemäß bei der Bestimmung des Abstands h als Oberfläche des Schmelzenbads der Mittelwert der Höhe der Oberfläche des Schmelzenbads verwendet. Erfindungsgemäß beträgt der Abstand h zwischen der Oberfläche des Schmelzenbads und dem unteren Rand der Düse 50 bis 800 mm, bevorzugt 80 bis 700 mm,

Erfindungsgemäß beschreibt $T_3$ die Temperatur des Abstreifgases in °C. Erfindungsgemäß beträgt $T_3$ 15 bis 50 °C, bevorzugt 20 bis 40 °C. Erfindungsgemäß ist es möglich, dass das Abstreifgas vor Verlassen der Düse auf eine entsprechende Temperatur $T_3$ aufgeheizt wird. Vorrichtungen dazu sind dem Fachmann an sich bekannt. Als Abstreifgas kann erfindungsgemäß jedes dem Fachmann als geeignet erscheinende Abstreifgas oder Abstreifgasgemisch eingesetzt werden. Bevorzugt betrifft die vorliegende Erfindung das erfindungsgemäße Verfahren, wobei das Abstreifgas, welches in Schritt (B) eingesetzt wird, ausgewählt ist aus der Gruppe bestehend aus Stickstoff oder einer Mischung aus Stickstoff, Sauerstoff und unvermeidbaren Verunreinigungen.

Erfindungsgemäß beträgt der Druck p, mit der das Abstreifgas die Düse verlässt, beispielsweise 50 bis 800 mbar, bevorzugt 100 bis 600 mbar.

In Schritt (B) des erfindungsgemäßen Verfahren beträgt der Abstand der Düse zum Band beispielsweise 4 bis 15 mm, bevorzugt 6 bis 12 mm.

Der erfindungsgemäß wesentliche Wert Q wird nach folgender Formel (I) bestimmt:

$$Q = \frac{3,76 + (\alpha * (10 + 6,3 * h)}{10 - 0,86 * T_3^2 + 4,82 * \Delta T} \qquad (I),$$

worin

$\alpha$      Winkel zwischen einer fiktiven Geraden, die senkrecht auf dem beschichteten Stahlband steht und durch die Mitte der wenigstens einen Düse zeigt, und der eingestellten Düsenrichtung, in °,

h     Abstand zwischen der Oberfläche des Schmelzenbades und dem unteren Rand der Düse in mm,

$T_3$     Temperatur des Abstreifgases in °C und

$\Delta T$     Differenz zwischen der Temperatur $T_2$ des Schmelzenbades und der Temperatur $T_1$ des Stahlbandes in °C

bedeuten. Die Parameter $\alpha$, h, $T_3$ und $\Delta T$ werden weiter oben detailliert erklärt.

Erfindungswesentlich ist, dass der Wert Q, der sich nach Formel (I) berechnen lässt, kleiner oder gleich 6,956 ist. Wenn der Wert Q kleiner oder gleich 6,956 ist, so werden erfindungsgemäß beschichtete Stahlbänder erhalten, die eine besonders vorteilhafte Oberfläche aufweisen, insbesondere ist die Langwelligkeit, die mit dem Wert wsa_mod bemessen wird, vorteilhaft. Ist der aus Formel (I) erhaltene Wert Q kleiner oder gleich 6,956, so beträgt der Quotient der wsa_mod-Werte, gemessen in Längs- bzw. Querrichtung (siehe Formel (II)), der Oberfläche der vor Korrosion schützenden Oberfläche bevorzugt 0,700 bis 1,290. Ist der aus Formel (I) erhaltene Wert Q größer 6,956, so wird ein unvorteilhafter Quotient der wsa_mod-Werte, gemessen in Längs- bzw. Querrichtung (siehe Formel (II)), der Oberfläche der vor Korrosion schützenden Oberfläche von größer oder gleich 1,300 erhalten.

Erfindungsgemäß wird bevorzugt ein Quotient der wsa_mod-Werte, gemessen in Längs- bzw. Querrichtung, gemäß der folgenden Formel (II) erhalten, der einen Wert von 0,700 bis 1,290 aufweist:

$$0{,}700 \leq \left(\frac{Wsa_{mod}längs}{Wsa_{mod}quer}\right) \leq 1{,}290 \qquad (II)$$

Die Oberfläche der erfindungsgemäß erhaltenen Beschichtung weist ein besonders vorteilhaftes Verhältnis aus Wsa_mod in Längsrichtung zu Wsa_mod in Querrichtung auf. Wenn in der vorliegenden Anmeldung von einem wsa_mod-Wert die Rede ist, so ist damit alleine die Eigenwelligkeit der Korrosionsschutzschicht, d.h. der Beschichtung des beschichteten Blechs, bezeichnet. Der wsa_mod-Wert aus der Messung der Auflagenverteilung der Korrosionsschutzschicht mittels einer ortsaufgelösten, rasternden Röntgenfluoreszenzanalyse (Fischerscope X-Ray) nach DIN EN ISO 3497 an 20 × 20 mm großen Flächen abgeleitet. Die Grenzwellenlängen zur Bestimmung des wsa_mod-Werts sind $\lambda c = 1$ mm und $\lambda f = 5$ mm. Die Grenzwellenlänge ist diejenige Wellenlänge, bei welcher der Profilfilter die Amplitude einer Sinuswelle auf 50 % reduziert. Sie kann als Maß für die Grenze zwischen Rauheit und Welligkeit verstanden werden. Die Grenzwellenlänge $\lambda f$ grenzt die Welligkeit gegenüber längeren Wellenlängen ab.

Nach Schritt (B) des erfindungsgemäßen Verfahrens weist die vor Korrosion schützende Schicht eine Dicke von beispielsweise 0,1 bis 20 $\mu$m, bevorzugt 1 bis 10 $\mu$m, auf.

In dem erfindungsgemäßen Verfahren werden Beschichtungen erhalten, in denen die vorliegenden $Fe_2Al_5$-Teilchen besonders niedrige Korndurchmesser aufweisen. Daher betrifft die vorliegende Erfindung insbesondere das erfindungsgemäße Verfahren, wobei in der Beschichtung vorliegende $Fe_2Al_5$-Teilchen einen mittleren Korndurchmesser von $\leq 210$ nm bei Beschichtungen enthaltend, insbesondere bestehend, aus Zn, Mg und Al und von $\leq 565$ nm bei Beschichtungen enthaltend, insbesondere bestehend aus, Zn und Al aufweisen.

Nach Schritt (B) des erfindungsgemäßen Verfahrens kann das beschichtete Stahlband weiteren Verfahrensschritten zugeführt werden. Diese sind dem Fachmann an sich bekannt und umfassen beispielsweise ein ein- oder mehrmaliges Dressieren, Streckrichten, Wärmebehandeln, insbesondere zur Erzeugung einer Legierungsschicht, Oberflächenbeschichten, beispielsweise Beölen, Aufbringen von Umformhilfen, chemischen Passivierungen, Versiegelungen, Haspeln, Trocknen, Besäumen etc..

Die vorliegende Erfindung betrifft auch ein mit einer vor Korrosion schützenden Beschichtung versehenes Stahlband, hergestellt durch das erfindungsgemäße ein Verfahren. Durch das erfindungsgemäße Verfahren umfassend wenigstens die Schritte (A) und (B) wird ein beschichtetes Stahlband erhalten, welches eine besonders niedrige Langwelligkeit aufweist, so dass eine Lackierung ohne die zusätzliche Verwendung eines Primers bzw. einer Grundierung aufgebracht werden kann und eine lackierte Oberfläche erhalten wird, die hohen Qualitätsansprüchen gerecht wird.

Die vorliegende Erfindung betrifft auch ein mit einer vor Korrosion schützenden Beschichtung versehenes Stahlband, dadurch gekennzeichnet, dass die Beschichtung ein Verhältnis aus Wsa_mod in Längsrichtung zu Wsa_mod in Querrichtung von 0,700 bis 1,290 aufweist und wobei die vor Korrosion schützende Beschichtung neben Zn und unvermeidbaren Verunreinigungen 0,1 bis 2,0 Gew.-% Al und optional 0,1 bis 3 Gew.-% Mg enthält. Die Bestimmung des wsa_mod-Werts erfolgt nach der oben genannten Methode.

Die bezüglich des erfindungsgemäßen Verfahrens genannten Details und bevorzugten Ausführungsformen gelten für das erfindungsgemäße Stahlband entsprechend.

Die vorliegende Erfindung betrifft des Weiteren die Verwendung eines erfindungsgemäßen Stahlbands im Automobilsektor, insbesondere für Nutzfahrzeuge, insbesondere Lastkraftwagen, Baumaschinen und Erdreichbewegungsfahrzeuge, im Industriesektor, beispielsweise als Gehäuse oder Teleskopschienen, im Bausektor, beispielsweise als Fassadenelemente, für Haushaltsgeräte, im Energiesektor, im Schiffsbau.

Die bezüglich des erfindungsgemäßen Verfahrens und des erfindungsgemäßen Stahlbands genannten Details und bevorzugten Ausführungsformen gelten für die erfindungsgemäße Verwendung entsprechend.

**Beispiele**

Die nachfolgenden Ausführungsbeispiele dienen der näheren Erläuterung der Erfindung.

Ein Stahlband mit der folgenden Zusammensetzung (alle Angaben in Gew.-%) 0,075 C, 0,1 Si, 1,53 Mn, 0,010 P, 0,001 S, 0,035 Al, 0,53 Cr, 0,05 Cu, 0,05 Mo, 0,0025 N, 0,025 Ti, 0,05 Ni, 0,0030 B, Rest Fe und unvermeidbare Verunreinigungen wird unter den in Tabelle 1 genannten Bedingungen mit Schmelzbädern, enthaltend die in Tabelle 1 genannten Legierungsbestandteile beschichtet. Nach Aufbringen der Schutzschicht wird an deren Oberfläche der wsa_mod-Wert nach der oben beschriebenen Methode bestimmt. Dabei werden Blechproben aus dem Stahlband entnommen und in Längs- und Querrichtung gemessen. Es wird dann der Quotient des wsa_mod-Werts für die Längsrichtung und dem Wert für die Querrichtung bestimmt.

Aus der Tabelle 1 geht klar hervor, dass die erfindungsgemäßen Beispiele mit einem Q-Wert von weniger als 6,956 entsprechende beschichtete Stahlbänder ergeben, die sich durch einen vorteilhaften Quotienten der wsa_mod-Werte auszeichnen, wohingegen bei Vergleichsversuchen, in denen der Q-Wert oberhalb von 6,956 beträgt, deutlich schlechtere Quotienten der wsa_mod-Werte und damit Oberflächenqualitäten erhalten werden.

**Tabelle 1: Beispiele und Vergleichsbeispiele**

| Lfd. Nr. | Zn-Gehalt [Gew.-%] | Mg-Gehalt [Gew.-%] | Al-Gehalt [Gew.-%] | $\Delta T$ [°C] | $T_3$ [°C] | h [mm] | $\alpha$ [°] | Mittl. Korndurchmesser [nm] | Wsa_mod_längs/ Wsa_mod_quer | Q |
|---|---|---|---|---|---|---|---|---|---|---|
| 1 | 99,771 | - | 0,229 | 35 | 35 | 330 | -2,4 | 540 | 1,077 | 5,73 |
| 2 | 99,786 | - | 0,214 | 15 | 34 | 250 | -2,1 | 510 | 1,154 | 3,65 |
| 3 | 99,785 | - | 0,215 | 18 | 35 | 240 | -2,1 | 515 | 1,167 | 3,34 |
| 4 | 99,779 | - | 0,221 | 13 | 32 | 260 | -2,4 | 530 | 1,231 | 4,89 |
| 5 | 99,768 | - | 0,232 | 15 | 30 | 260 | -2,4 | 550 | 1,286 | 5,71 |
| 6 | 99,775 | - | 0,225 | 19 | 29 | 270 | -2,1 | 535 | 1,267 | 5,77 |
| 7 | 99,781 | - | 0,219 | 18 | 31 | 290 | -2,2 | 525 | 1,231 | 5,53 |
| 8 | 99,772 | - | 0,228 | 20 | 30 | 302 | -2,2 | 540 | 1,267 | 6,30 |
| V9 | 99,750 | - | 0,250 | 20 | 25 | 330 | -2,6 | 605 | 1,467 | 12,59 |
| V10 | 99,760 | - | 0,240 | 22 | 26 | 300 | -2,4 | 585 | 1,429 | 9,79 |
| V11 | 99,762 | - | 0,238 | 22 | 24 | 290 | -2,6 | 585 | 1,438 | 12,58 |
| V12 | 99,764 | - | 0,236 | 24 | 26 | 310 | -2,4 | 570 | 1,333 | 10,33 |
| V13 | 99,767 | - | 0,233 | 24 | 26 | 300 | -2,5 | 570 | 1,308 | 10,42 |
| V14 | 99,751 | - | 0,249 | 26 | 23 | 330 | -2,7 | 595 | 1,571 | 17,64 |
| V15 | 99,757 | - | 0,243 | 26 | 24 | 250 | -2,5 | 590 | 1,389 | 11,00 |
| 16 | 99,900 | - | 0,100 | 11 | 29 | 260 | -2,2 | 450 | 1,188 | 5,49 |
| V17 | 99,500 | - | 0,500 | -31 | 27 | 350 | -2,8 | 655 | 1,316 | 8,09 |
| 18 | 99,900 | - | 0,100 | 9 | 39 | 265 | -5,0 | 445 | 1,270 | 6,69 |
| 19 | 99,890 | - | 0,110 | -4 | 32 | 285 | -3,0 | 455 | 1,227 | 6,08 |
| 20 | 99,869 | - | 0,131 | 110 | 28 | 270 | 0,5 | 475 | 1,217 | -6,41 |
| 21 | 99,825 | - | 0,175 | -51 | 39 | 280 | -2,2 | 500 | 1,143 | 2,53 |
| 22 | 99,800 | - | 0,200 | 19 | 34 | 304 | 5,0 | 505 | 1,263 | -10,79 |
| 23 | 99,785 | - | 0,215 | 20 | 33 | 100 | -2,1 | 510 | 1,250 | 1,61 |

(fortgesetzt)

| Lfd. Nr. | Zn-Gehalt [Gew.-%] | Mg-Gehalt [Gew.-%] | Al-Gehalt [Gew.-%] | $\Delta T$ [°C] | $T_3$ [°C] | h [mm] | $\alpha$ [°] | Mittl. Korndurchmesser [nm] | Wsa_mod_längs/ Wsa_mod_quer | Q |
|---|---|---|---|---|---|---|---|---|---|---|
| 24 | 99,777 | - | 0,223 | 57 | 35 | 270 | -2,1 | 530 | 1,200 | 4,67 |
| 25 | 99,769 | - | 0,231 | 10 | 31 | 600 | -1,2 | 550 | 1,222 | 5,91 |
| 26 | 97,772 | 1,058 | 1,170 | 7 | 33 | 240 | -2 | 165 | 1,100 | 3,41 |
| 27 | 97,758 | 1,052 | 1,190 | 23 | 30 | 270 | -2,1 | 170 | 1,200 | 5,50 |
| 28 | 97,724 | 1,066 | 1,210 | 17 | 37 | 422 | -2,4 | 175 | 1,182 | 5,90 |
| 29 | 97,779 | 1,061 | 1,160 | 15 | 33 | 250 | -2,1 | 165 | 1,091 | 3,89 |
| 30 | 97,528 | 1,059 | 1,413 | 22 | 31 | 315 | -2,3 | 205 | 1,273 | 6,45 |
| 31 | 97,572 | 1,058 | 1,370 | 18 | 33 | 280 | -2,3 | 185 | 1,182 | 4,85 |
| V32 | 97,536 | 1,052 | 1,412 | 25 | 29 | 310 | -2,3 | 215 | 1,310 | 7,61 |
| 33 | 97,563 | 1,057 | 1,380 | 20 | 32 | 290 | -2,3 | 190 | 1,200 | 5,45 |
| V34 | 97,538 | 1,051 | 1,411 | 23 | 25 | 340 | -2,4 | 215 | 1,364 | 12,39 |
| 35 | 97,698 | 1,052 | 1,250 | 40 | 35 | 300 | -2,5 | 180 | 1,077 | 5,58 |
| 36 | 97,520 | 1,063 | 1,417 | 25 | 31 | 300 | -2,4 | 205 | 1,250 | 6,55 |
| 37 | 97,693 | 1,067 | 1,240 | 21 | 31 | 260 | -2,2 | 175 | 1,182 | 5,06 |
| 38 | 97,684 | 1,056 | 1,260 | 19 | 34 | 260 | -2,2 | 180 | 1,167 | 4,06 |
| V39 | 97,459 | 1,066 | 1,475 | 23 | 25 | 400 | -2,5 | 230 | 1,364 | 15,17 |
| V40 | 97,526 | 1,054 | 1,420 | 28 | 27 | 330 | -2,3 | 220 | 1,333 | 9,96 |
| V41 | 97,600 | 1,000 | 1,400 | 10 | 28 | 330 | -2,5 | 215 | 1,310 | 8,47 |
| 42 | 97,000 | 2,000 | 1,000 | 25 | 32 | 314 | -2,3 | 160 | 1,273 | 6,09 |
| V43 | 96,950 | 1,050 | 2,000 | 30 | 31 | 325 | -2,5 | 260 | 1,310 | 7,65 |
| 44 | 97,787 | 1,063 | 1,150 | -9 | 34 | 240 | 0,5 | 165 | 1,083 | -0,74 |
| 45 | 97,609 | 1,061 | 1,330 | -5 | 32 | 280 | -3,0 | 185 | 1,182 | 5,94 |
| 46 | 97,548 | 1,052 | 1,400 | -40 | 34 | 250 | -2,4 | 205 | 1,067 | 3,23 |
| 47 | 97,591 | 1,052 | 1,357 | -50 | 39 | 285 | -2,4 | 185 | 0,786 | 2,81 |
| 48 | 97,550 | 1,050 | 1,400 | 52 | 34 | 275 | -2,2 | 200 | 1,231 | 5,22 |
| 49 | 97,557 | 1,053 | 1,390 | 7 | 39 | 260 | -5,0 | 190 | 1,143 | 6,51 |
| 50 | 97,890 | 1,060 | 1,050 | 6 | 39 | 600 | -2,3 | 160 | 1,182 | 6,87 |
| 51 | 97,539 | 1,049 | 1,412 | 108 | 32 | 275 | 0,5 | 195 | 1,059 | -2,50 |
| 52 | 97,592 | 1,058 | 1,350 | 18 | 25 | 100 | -2,1 | 180 | 1,000 | 3,04 |
| 53 | 97,599 | 1,064 | 1,337 | -5 | 31 | 290 | -3,0 | 185 | 0,867 | 6,55 |
| 54 | 97,521 | 1,066 | 1,413 | 19 | 39 | 310 | 5,0 | 200 | 0,938 | -8,14 |
| V Vergleichsversuch | | | | | | | | | | |

**Gewerbliche Anwendbarkeit**

Durch das erfindungsgemäße Verfahren können beschichtete Stahlbänder erhalten werden, die sich durch eine besonders hochwertige Oberflächenstruktur auszeichnen. Daher können diese Stahlbänder vorteilhaft im Automobilbereich eingesetzt werden.

**Patentansprüche**

1. Verfahren zur Herstellung eines Stahlbandes mit einer vor Korrosion schützenden Beschichtung, mindestens umfassend die folgenden Schritte:

   (A) Durchführen des Stahlbandes mit einer Temperatur $T_1$ durch ein Schmelzenbad mit einer Temperatur $T_2$, enthaltend die Elemente der vor Korrosion schützenden Beschichtung in geschmolzener Form, um ein beschichtetes Stahlband zu erhalten, wobei das Schmelzenbad neben Zn und unvermeidbaren Verunreinigungen 0,1 bis 2,0 Gew.-% Al und optional 0,1 bis 3 Gew.-% Mg enthält,
   (B) Abstreifen des beschichteten Stahlbandes mittels wenigstens einer Düse, die ein Abstreifgas mit einer Temperatur $T_3$ unter einem Winkel $\alpha$ in Richtung des beschichteten Stahlbandes ausstößt,

   **dadurch gekennzeichnet, dass** der Wert $Q \leq 6,956$ ist mit

   $$Q = \frac{3,76 + (\alpha * (10 + 6,3 * h)}{10 - 0,86 * T_3{}^2 + 4,82 * \Delta T} \text{ (I)},$$

   worin

   $\alpha$ Winkel zwischen einer fiktiven Geraden, die senkrecht auf dem beschichteten Stahlband steht und durch die Mitte der wenigstens einen Düse zeigt, und der eingestellten Düsenrichtung, in °,
   h Abstand zwischen der Oberfläche des Schmelzenbades und dem unteren Rand der Düse in mm,
   $T_3$ Temperatur des Abstreifgases in °C, und
   $\Delta T$ Differenz zwischen der Temperatur $T_2$ des Schmelzenbades und der Temperatur $T_1$ des Stahlbandes in °C,

   bedeuten, wobei $\Delta T$ -60 Bis +120 °C beträgt, wobei $T_3$ 15 bis 50 °C beträgt, wobei der Winkel $\alpha$ -5,0° bis +5,0° beträgt, wobei h zwischen 50 bis 800 mm beträgt.

2. Verfahren nach Anspruch 1, **dadurch gekennzeichnet, dass** das Stahlband neben Fe und unvermeidbaren Verunreinigungen (alle Angaben in Gew.-%)

   0,00 bis 0,3 C,
   0,00 bis 1,50 Si,
   0,01 bis 4,00 Mn,
   0,00 bis 0,10 P,
   0,00 bis 0,02 S,
   0,001 bis 2,20 Al,
   bis zu 0,2 Ti+Nb,
   bis 1,50 Cr+Mo,
   bis zu 0,25 V,
   bis zu 0,01N,
   0,00 bis 0,20Ni,
   bis zu 0,01B und
   bis zu 0,01 Ca
   enthält.

3. Verfahren nach einem der Anspruch 1 oder 2, **dadurch gekennzeichnet, dass** es kontinuierlich durchgeführt wird.

4. Verfahren nach einem der Ansprüche 1 bis 3, **dadurch gekennzeichnet, dass** die vor Korrosion schützende Beschichtung eine Dicke von 1 bis 10 $\mu$m aufweist.

**5.** Verfahren nach einem der Ansprüche 1 bis 4, **dadurch gekennzeichnet, dass** in der Beschichtung vorliegende $Fe_2Al_5$-Teilchen einen mittleren Korndurchmesser von $\leq$ 210 nm bei Beschichtungen enthaltend, insbesondere bestehend, aus Zn, Mg und Al und von $\leq$ 565 nm bei Beschichtungen enthaltend, insbesondere bestehend aus, Zn und Al aufweisen.

**6.** Verfahren nach einem der Ansprüche 1 bis 5, **dadurch gekennzeichnet, dass** das Abstreifgas, welches in Schritt (B) eingesetzt wird, ausgewählt ist aus der Gruppe bestehend aus Stickstoff, Sauerstoff, Luft und Mischungen davon.

**7.** Mit einer vor Korrosion schützenden Beschichtung versehenes Stahlband, **dadurch gekennzeichnet, dass** die Beschichtung ein Verhältnis aus Wsa_mod in Längsrichtung zu Wsa_mod in Querrichtung von 0,700 bis 1,290 aufweist und, dass die vor Korrosion schützende Beschichtung neben Zn und unvermeidbaren Verunreinigungen 0,1 bis 2,0 Gew.-% Al und optional 0,1 bis 3 Gew.-% Mg enthält.

**8.** Verwendung eines Stahlbands nach Anspruch 7 im Automobilsektor, insbesondere für Nutzfahrzeuge, insbesondere Lastkraftwagen, Baumaschinen und Erdreichbewegungsfahrzeuge, im Industriesektor, beispielsweise als Gehäuse oder Teleskopschienen, im Bausektor, beispielsweise als Fassadenelemente, für Haushaltsgeräte, im Energiesektor, im Schiffsbau.

**Claims**

**1.** Method of producing a steel strip having a corrosion-protective coating, at least comprising the following steps:

(A) conducting the steel strip having a temperature $T_1$ through a melt bath having a temperature $T_2$, containing the elements of the corrosion-protective coating in molten form, in order to obtain a coated steel strip, where the melt bath, as well as Zn and unavoidable impurities, contains 0.1% to 2.0% by weight of Al and optionally 0.1% to 3% by weight of Mg,

(B) stripping the coated steel strip by means of at least one nozzle that emits a stripping gas having a temperature $T_3$ at an angle $\alpha$ in the direction of the coated steel strip,

**characterized in that** the value Q is $\leq$ 6.956 with

$$Q = \frac{3.76 + (\alpha * (10 + 6.3 * h)}{10 - 0.86 * T_3{}^2 + 4.82 * \Delta T} \text{(I)}$$

in which

$\alpha$ is the angle between a theoretical straight line perpendicular to the coated steel strip and pointing through the middle of the at least one nozzle, and the nozzle direction set, in °,

h is the distance between the surface of the melt bath and the lower edge of the nozzle in mm,

$T_3$ is the temperature of the stripping gas in °C, and

$\Delta T$ is the difference between the temperature $T_2$ of the melt bath and the temperature $T_1$ of the steel strip in °C,

where $\Delta T$ is -60 to +120°C, where $T_3$ is 15 to 50°C, where the angle $\alpha$ is - 5.0° to +5.0°, where h is between 50 and 800 mm.

**2.** Method according to Claim 1, **characterized in that** the steel strip, as well as Fe and unavoidable impurities, contains (all figures in % by weight)

0.00 to 0.3 C,
0.00 to 1.50 Si,
0.01 to 4.00 Mn,
0.00 to 0.10 P,
0.00 to 0.02 S,
0.001 to 2.20 Al,
up to 0.2 Ti+Nb,

up to 1.50 Cr+Mo,
up to 0.25 V,
up to 0.01 N,
0.00 to 0.20 Ni,
up to 0.01 B and
up to 0.01 Ca.

3. Method according to Claim 1 or 2, **characterized in that** it is performed continuously.

4. Method according to any of Claims 1 to 3, **characterized in that** the corrosion-protective coating has a thickness of 1 to 10 $\mu$m.

5. Method according to any of Claims 1 to 4, **characterized in that** $Fe_2Al_5$ particles present in the coating have an average grain diameter of $\leq 210$ nm in coatings containing, especially consisting of, Zn, Mg and Al and of $\leq 565$ nm in coatings containing, especially consisting of, Zn and Al.

6. Method according to any of Claims 1 to 5, **characterized in that** the stripping gas which is used in step (B) is selected from the group consisting of nitrogen, oxygen, air and mixtures thereof.

7. Steel strip that has been provided with a corrosion-protective coating, **characterized in that** the coating has a ratio of Wsa_mod in longitudinal direction to Wsa_mod in cross direction of 0.700 to 1.290, and **in that** the corrosion-protective coating, in addition to Zn and unavoidable impurities, contains 0.1% to 2.0% by weight of Al and optionally 0.1% to 3% by weight of Mg.

8. Use of a steel strip according to Claim 7 in the automotive sector, especially for utility vehicles, especially trucks, construction machinery and earthmoving vehicles, in the industrial sector, for example as housing or telescopic slides, in the construction sector, for example as facade elements, for domestic appliances, in the energy sector, in shipbuilding.

**Revendications**

1. Procédé de fabrication d'un ruban d'acier doté d'un revêtement de protection contre la corrosion, comprenant au moins les étapes suivantes :

   (A) passage du ruban d'acier à une température $T_1$ à travers un bain fondant à une température $T_2$, contenant les éléments du revêtement de protection contre la corrosion sous forme fondue, afin de d'obtenir un ruban d'acier revêtu, le bain fondant contenant outre du Zn et des impuretés inévitables, 0,1 à 2,0 % en poids d'Al et éventuellement 0,1 à 3 % en poids de Mg,
   (B) raclage du ruban d'acier revêtu au moyen d'au moins une buse qui expulse un gaz de raclage à une température $T_3$ et un angle $\alpha$ dans la direction du ruban d'acier revêtu,
   **caractérisé en ce que** la valeur Q est $\leq 6,956$ avec

   $$Q = \frac{3,76 + (\alpha * (10 + 6,3 * h)}{10 - 0,86 * T_3{}^2 + 4,82 * \Delta T} \text{ (I)},$$

   dans laquelle

   $\alpha$ signifie l'angle entre une droite fictive perpendiculaire au ruban d'acier revêtu et qui pointe à travers le centre de l'au moins une buse, et la direction de buse ajustée, en °,
   h signifie la distance entre la surface du bain fondant et le bord inférieur de la buse en mm,
   $T_3$ signifie la température du gaz de raclage en °C, et
   $\Delta T$ signifie la différence entre la température $T_2$ du bain fondant et la température $T_1$ du ruban d'acier en °C,

   $\Delta T$ étant de -60 à + 120 °C, $T_3$ étant de 15 à 50 °C, l'angle $\alpha$ étant de -5,0° à +5,0°, h étant comprise entre 50 et 800 mm.

2. Procédé selon la revendication 1, **caractérisé en ce que** le ruban d'acier contient outre du Fe et des impuretés inévitables (toutes les données en % en poids)

0,00 à 0,3 C,
0,00 à 1,50 Si,
0,01 à 4,00 Mn,
0,00 à 0,10 P,
0,00 à 0,02 S,
0,001 à 2,20 Al,
jusqu'à 0,2 Ti + Nb,
jusqu'à 1,50 Cr + Mo,
jusqu'à 0,25 V,
jusqu'à 0,01 N,
0,00 à 0,20 Ni,
jusqu'à 0,01 B et
jusqu'à 0,01 Ca.

3. Procédé selon la revendication 1 ou 2, **caractérisé en ce qu'**il est mis en oeuvre en continu.

4. Procédé selon l'une quelconque des revendications 1 à 3, **caractérisé en ce que** le revêtement de protection contre la corrosion présente une épaisseur de 1 à 10 $\mu$m.

5. Procédé selon l'une quelconque des revendications 1 à 4, caractérisé en en ce que des particules de $Fe_2Al_5$ présentes dans le revêtement présentent un diamètre moyen de grain de $\leq$ 210 nm pour des revêtements contenant, en particulier constitués de, Zn, Mg et Al et de $\leq$ 565 nm pour des revêtements contenant, en particulier constitués de, Zn et Al.

6. Procédé selon l'une quelconque des revendications 1 à 5, **caractérisé en ce que** le gaz de raclage qui est utilisé dans l'étape (B) est choisi dans le groupe constitué par l'azote, l'oxygène, l'air et des mélanges correspondants.

7. Ruban d'acier pourvu d'un revêtement de protection contre la corrosion, **caractérisé en ce que** le revêtement présente un rapport de Wsa_mod dans la direction longitudinale sur Wsa_mod dans la direction transversale de 0,700 à 1,290 et **en ce que** le revêtement de protection contre la corrosion contient outre du Zn et des impuretés inévitables, 0,1 à 2,0 % en poids d'Al et éventuellement 0,1 à 3 % en poids de Mg.

8. Utilisation d'un ruban d'acier selon la revendication 7 dans le secteur automobile, en particulier pour des véhicules utilitaires, en particulier des camions, des machines de construction et des véhicules de terrassement, dans le secteur industriel, par exemple comme boîtier ou glissières télescopiques, par exemple en tant qu'élément de façade, pour des appareils ménagers, dans le secteur de l'énergie, dans la construction navale.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202014010854 U1
- DE 202014008863 U1
- DE 112014000102 T5
- US 20120107636 A1
- US 3619247 A
- US 3681118 A
- WO 2006002843 A1
- EP 3205741 A1

**In der Beschreibung aufgeführte Nicht-Patentliteratur**

- **A.R. MARDER.** The metallurgy of zinc-coated steel sheet. *Progress in Materials Science,* 2000, vol. 45, 191-271
- **A.R. MARDER.** The metallurgy of zinc-coated steel sheet. *Progress in Materials Science,* 2000, vol. 45, 191-271